# DEMANDE DE BREVET EUROPEEN

(11) **EP 2 667 369 A1**
(43) Date de publication de la demande: **27.11.2013**
(21) Numéro de dépôt: 13002676.8
(22) Date de dépôt: 22.05.2013
(51) Int. Cl.: G09B 29/10

(54) **Procédé de mise en oeuvre d'un système d'informations cartographiques générateur d'images superposées**

(30) Priorité: 25.05.2012 FR 1201506
(71) Demandeur: EUROCOPTER, 13725 Marignane cedex (FR)
(72) Inventeur: Simon, Julien, 13100 Aix en Provence (FR); Andre, Olivier, 13620 Carry le Rouet (FR)
(74) Mandataire: GPI & Associés

(57) **Abrégé**

L'invention a pour objet un procédé de mise en oeuvre d'un système d'informations cartographiques générateur d'une image principale (4) et d'une image superposée (5) relatives à une même zone géographique. Les images (4,5) sont affichées dans des fenêtres respectives (4',5') comportant chacune un réticule (16,17) identifiant un point géographique commun à partir duquel les images (4,5) sont dépendantes l'une de l'autre. Les images (4,5) sont individuellement modifiables par l'opérateur au moyen d'outils de traitement d'image (36,36').

## Description

La présente invention est du domaine des systèmes de traitement d'images numériques intégrés à un système d'informations cartographiques. La présente invention relève plus particulièrement des systèmes d'informations cartographiques au sol ou embarqués à bord d'un véhicule, aéronef notamment et plus spécifiquement giravion. Le système de traitement d'images numériques forme une interface entre un utilisateur, un écran d'affichage et des outils de traitement d'image activables par un opérateur, pour afficher en superposition une pluralité d'images relatives à une même zone géographique identifiée.

Les systèmes d'informations cartographiques permettent d'afficher sur un écran des images relatives à une ou plusieurs zones géographiques.

Un opérateur dispose d'outils de traitement d'image permettant de faire varier les images. Si l'opérateur dispose d'un écran tactile, de tels outils de traitement d'image peuvent être avantageusement activés par contact ou pression sur des symboles générés puis affichés sur l'écran.

Plusieurs images présentant des informations relatives à des zones identiques ou différentes peuvent être affichées à l'intérieur de fenêtres respectives. Une fenêtre principale peut être affichée et une autre fenêtre peut être affichée en superposition sur la fenêtre principale. Une modification des images respectivement affichées par les fenêtres relève par exemple d'un déplacement en translation et/ou en pivotement des images à l'intérieur des fenêtres.

Parmi les systèmes d'informations cartographiques, il est connu ceux permettant l'affichage d'images superposées différentes et relatives à une même zone géographique.

Par exemple selon le document EP2079052 (RESEARCH IN MOTION Ltd), une image superposée est déplacée sur une image principale affichée à l'intérieur d'une fenêtre, le long d'un parcours préalablement identifié d'un véhicule sur lequel est embarqué un système d'informations cartographiques. L'image superposée correspond à un grossissement localisé de l'image principale. Des grossissements de zones successives de l'image principale sont opérés par le système d'informations cartographiques, en fonction de la progression du véhicule le long du parcours.

Dans le domaine de l'aéronautique, il est courant d'exploiter des systèmes d'informations cartographiques embarqués à bord des aéronefs pour la préparation et l'exécution de missions de vol, et pour l'établissement d'un bilan de ces missions de vol.

De tels systèmes d'informations cartographiques sont notamment exploités pour repérer un trajet de navigation entre au moins deux points géographiques distants. Le système d'informations cartographiques est susceptible de générer des images relatives à une zone géographique commune mais relatives à des informations différentes, voire à des types d'informations différents. Les images affichées sont issues de supports respectifs répertoriés dans au moins une base de données. Un support (ou layer en langue anglaise) est un fichier numérique contenant les informations nécessaires à l'affichage d'images. De tels types d'informations sont par exemple relatifs à des informations cartographiques, des photos illustrant l'environnement de la zone géographique, des illustrations du relief de la zone géographique ou toutes autres informations susceptibles d'être utiles à la navigation d'un aéronef.

Les exigences d'exploitation de tels systèmes d'informations cartographiques dans le domaine aéronautique incitent à améliorer les capacités et les performances de ces systèmes, notamment au regard de l'affichage d'informations utiles à la navigation qui sont de plus en plus diversifiées et complexes.

Une telle recherche de performances porte notamment sur l'exploitation de divers types d'informations en nombre optimisé pour une même zone géographique et sur la possibilité d'exploiter de telles informations diverses pour des zones géographiques localisées et pour une couverture de vastes zones géographiques.

Il est souhaitable que la diversité des informations permette d'exploiter les systèmes d'informations cartographiques pour diverses fonctions, telles que l'exploration des différentes zones géographiques, la préparation de missions de vol et le suivi de leur exécution, l'établissement de bilans de missions de vol exécutées, l'avionique embarquée ou le suivi d'activités aéronautiques en temps réel par exemple.

Une telle recherche de performances ne doit cependant pas être faite au détriment de l'ergonomie et de l'aisance d'exploitation par un opérateur du système d'informations cartographiques. L'utilisation confortable d'écrans tactiles pour activer les outils de traitement d'image à la disposition de l'opérateur doit être privilégiée. Les images doivent pouvoir être exploitées par un opérateur avec aisance et de manière simple, malgré la diversité offerte d'informations à afficher potentiellement utiles pour l'opérateur.

A titre indicatif non limitatif, une difficulté pour l'opérateur est d'obtenir une précision satisfaisante dans la désignation, la consultation et la récupération des informations pour une zone géographique identifiée.

Dans le cas d'un écran tactile, l'opérateur peut modifier une image à partir d'une pression qu'il exerce sur une zone choisie, au moyen de son doigt notamment. D'autres outils informatiques distants sont couramment exploités de manière analogue pour modifier les images, tels qu'un clavier ou une souris.

L'observation de deux zones géographiques localisées distantes est délicate, et tend à induire un accroissement inconfortable des opérations à effectuer. L'observation successive de zones géographiques localisées distinctes est compliquée, avec fréquemment une perte d'affichage temporaire de certaines informations.

Pour éviter d'encombrer l'écran, il est courant de symboliser les outils de traitement d'image sous forme de boutons placés par exemple en bordure d'écran. L'activation par l'opérateur de tels boutons est inconfortable, mais cette solution est traditionnellement privilégiée car elle permet de retrouver une information parmi une pluralité de fenêtres activées mais temporairement escamotées de l'écran ou masquées par d'autres fenêtres.

Un accès simultané à diverses fenêtres communes à une même zone géographique ou relatives à des zones géographiques distinctes tend à accroître le nombre de boutons à afficher, et rend délicat un tel accès simultané pour l'opérateur. Le confort susceptible d'être procuré par l'utilisation d'un écran de grande taille est altéré par la nécessité pour l'opérateur d'afficher simultanément plusieurs fenêtres de tailles réduites.

Le but de la présente invention est de proposer un procédé de mise en oeuvre d'un système d'informations cartographiques, dans le cadre des contraintes précédemment énoncées. De telles contraintes sont notamment relatives à l'obtention d'un affichage confortable d'informations diverses et précises couvrant avec précision de vastes zones géographiques, et à une modification rapide et aisée par l'opérateur des images affichées par l'écran.

La présente invention vise plus particulièrement à améliorer l'ergonomie d'un tel système d'informations cartographiques, en procurant un compromis satisfaisant entre sa performance et l'aisance de son exploitation par un opérateur.

Le procédé de la présente invention est un procédé de mise en oeuvre d'un système d'informations cartographiques générateur d'images affichées en superposition sur un écran. Les images comprennent une image principale et au moins une image superposée sur l'image principale.

Selon la présente invention, le procédé est principalement reconnaissable en ce que l'image principale et l'image superposée sont affichées dans des fenêtres distinctes. Les fenêtres comprennent une fenêtre principale pour l'affichage de l'image principale et une fenêtre superposée pour l'affichage de l'image superposée.

La fenêtre principale et la fenêtre superposée comportent chacune un réticule. Un réticule est un symbole graphique permettant de désigner un point de l'écran. Les réticules comprennent un réticule principal pour la fenêtre principale et un réticule superposé pour la fenêtre superposée. Les réticules désignent un point géographique commun, par lequel les images sont rendues dépendantes l'une de l'autre. Le dit point géographique commun peut être caractérisé par une longitude et une latitude voire encore une altitude. Le réticule forme une représentation graphique d'un bouton de commande activable par l'opérateur, une activation dudit bouton de commande provoquant la définition par le système de traitement de données du point géographique commun et la mise sous dépendance de l'image principale et de l'image superposée entre elles.

Le positionnement de l'un quelconque des réticules sur l'image qui lui est affectée détermine le dit point géographique commun et la position de l'autre réticule. Le déplacement de l'un quelconque des réticules sur l'image qui lui est affectée permet de modifier le dit point géographique commun ce qui implique un changement correspondant de position de l'autre réticule sur l'image qui lui est affectée.

Par exemple, le positionnement par l'opérateur du réticule principal sur l'image principale détermine le point géographique commun duquel découle ensuite la position du réticule superposé sur l'image superposée. L'image superposée et la position du réticule superposé sur l'image superposée sont calculées et affichées de manière à ce que le réticule superposé ait une position sur un point géographique de l'image superposée égal au point géographique sur lequel est positionné le réticule principal sur l'image principale.

Par exemple encore, le positionnement par l'opérateur du réticule superposé sur l'image superposée détermine le point géographique commun duquel découle ensuite la position du réticule principal sur l'image principale. L'image principale et la position du réticule principal sur l'image principale sont calculées et affichées de manière à ce que le réticule principal ait une position sur un point géographique de l'image principale égal au point géographique sur lequel est positionné le réticule superposé sur l'image superposée.

L'image principale et l'image superposée sont avantageusement individuellement modifiables par un opérateur au moyen de batteries d'outils de traitement d'image commandés par l'opérateur.

Les images sont notamment affichées de façon dépendante par le fait que les réticules sont à chaque instant positionnés sur un même point géographique : le point géographique commun. Une telle dépendance est préférentiellement réalisée de manière automatique par le procédé de mise en oeuvre du système cartographique, mais peut être aussi initiée à partir d'un ordre de commande généré par un opérateur.

De préférence, une batterie d'outils de traitement d'image est affectée à l'image principale et une batterie d'outils de traitement d'image est affectée à l'image superposée. L'image principale et l'image superposée sont par exemple modifiées en opérant un grossissement de l'image ou un déplacement de l'image par translation ou par rotation dans leurs fenêtres respectives.

A partir des outils de traitement d'image, l'opérateur peut effectuer diverses opérations, et notamment l'une au moins des opérations de déplacement suivantes :
-) déplacer l'image principale dans la fenêtre principale,
-) déplacer le réticule principal dans la fenêtre principale,
-) déplacer la fenêtre superposée dans la fenêtre principale,
-) déplacer l'image superposée dans la fenêtre superposée,
-) déplacer le réticule superposé dans la fenêtre superposée.

De telles opérations de déplacement sont susceptibles d'être indifféremment effectuées par l'opérateur par contact ou par pression puis par glissement au moyen de l'écran tactile, ou au moyen d'un outil de commande informatique distant, tel que souris ou clavier.

Pour effectuer les dites opérations de déplacement, l'opérateur peut avantageusement mettre en oeuvre au moins un, voire plusieurs modes opératoires de traitement des images. Le procédé comprend l'un au moins des modes opératoires suivants :
-) fixer l'image principale dans la fenêtre principale,
-) rendre mobile l'image principale dans la fenêtre principale,
-) fixer le réticule principal dans la fenêtre principale et rendre le réticule principal mobile dans l'image principale,
-) rendre mobile le réticule principal dans la fenêtre principale et fixer le réticule principal dans l'image principale,
-) fixer le réticule principal dans la fenêtre principale et dans l'image principale,
-) rendre mobile le réticule principal dans la fenêtre principale et dans l'image principale,
-) fixer la fenêtre superposée dans la fenêtre principale,
-) rendre mobile la fenêtre superposée dans la fenêtre principale,
-) fixer la fenêtre superposée au réticule principal,
-) fixer et superposer le réticule superposé au réticule principal,
-) rendre mobile la fenêtre superposée par rapport au réticule principal,
-) fixer l'image superposée dans la fenêtre superposée,
-) rendre mobile l'image superposée dans la fenêtre superposée,
-) fixer le réticule superposé dans la fenêtre superposée,
-) rendre mobile le réticule superposé dans la fenêtre superposée,

Il sera compris que la sélection et l'activation par l'opérateur d'un mode opératoire voire de plusieurs modes opératoires simultanément peut empêcher la sélection par l'opérateur de certains autres modes opératoires, ou empêcher l'opérateur d'exécuter certaines opérations. Par exemple, si l'image principale est fixée dans la fenêtre principale, et si le réticule principal est fixé dans l'image principale, alors le réticule principal ne peut pas être déplacé dans la fenêtre principale.

Selon une forme particulière de réalisation, le réticule principal et le réticule superposé sont confondus en un réticule commun affiché sur l'image superposée dans la fenêtre superposée. Plus particulièrement, le réticule commun est formé du réticule de la fenêtre superposée qui masque le réticule de la fenêtre principale. Dans ce mode, le déplacement du réticule commun entraînera le même déplacement sur l'écran du réticule principal et du réticule superposé qui resteront donc à tout moment confondus.

Les réticules de chacune des fenêtres sont notamment confondus en un réticule commun affiché à l'intérieur de la fenêtre superposée. Il est envisageable de rendre confondus en un réticule commun le réticule principal et le réticule superposé soit de manière permanente soit à partir d'une sélection d'un mode opératoire particulier effectuée par l'opérateur au moyen d'un outil de commande dédié.

Le réticule principal et le réticule superposé sont susceptibles d'être confondus de manière temporaire ou pérenne.

Le procédé peut comprendre l'une quelconque au moins des opérations suivantes de traitement de l'image superposée et de l'image principale par l'opérateur au moyen d'outils de traitement d'image respectifs :
-) positionner le réticule principal sur l'image principale et le réticule superposé sur l'image superposée en un point géographique par saisie des coordonnées géographiques du dit point géographique.
-) remplacer par une nouvelle image l'une quelconque de l'image principale et de l'image superposée, l'autre image étant inchangée. Il est à comprendre qu'une telle opération de remplacement d'image est opérée à partir d'un changement de support duquel l'image est issue.
-) Modifier l'image issue d'un support, par exemple à partir d'une opération de déplacement en translation et/ou en pivotement d'une image issue d'un même support, voire encore une opération de changement progressif de taille (grossissement ou rétrécissement) d'une image issue d'un support. Plus particulièrement, le procédé peut encore comprendre l'une quelconque au moins des opérations suivantes de traitement de l'image superposée et de l'image principale par l'opérateur au moyen d'outils de traitement d'image respectifs :
   -) modifier l'échelle de l'une quelconque de l'image principale et de l'image superposée, l'autre image étant inchangée,
   -) modifier l'échelle de l'une quelconque de l'image principale et de l'image superposée, l'échelle de l'autre image étant changée en correspondance,
   -) faire pivoter l'une quelconque de l'image principale et de l'image superposée, l'autre image étant inchangée,
   -) faire pivoter l'une quelconque de l'image principale et de l'image superposée, l'autre image pivotant en correspondance,
   -) déplacer en translation par glissement l'une quelconque de l'image principale et de l'image superposée,, l'autre image étant déplacée en translation en correspondance,
   -) orienter au nord l'une quelconque de l'image principale et de l'image superposée, l'autre image étant inchangée,

Plus particulièrement, le procédé peut aussi comprendre les opérations suivantes :
- générer l'affichage de l'image principale à partir de l'activation par l'opérateur d'au moins un outil d'appel d'affichage affecté à l'image principale,
- générer l'affichage de l'image superposée à partir de l'activation par l'opérateur d'un outil d'appel d'affichage affecté à l'image superposée,
- positionner l'un quelconque des réticules sur une cible géographique correspondant à zone géographique à observer, le dit positionnement provoquant un déplacement de l'une au moins des images,
puis, à partir de l'activation sélective d'outils de traitement d'image par l'opérateur, provoquer un traitement des paramètres d'affichage de l'image principale et de l'image superposé selon les modalités alternatives suivantes :
-) soit maintenir en l'état les paramètres d'affichage de l'image principale et modifier les paramètres d'affichage de l'image superposée à partir d'une activation par l'opérateur d'un outil de traitement d'image de la première batterie d'outils de traitement d'image,
-) soit maintenir en l'état les paramètres d'affichage de l'image superposée, et modifier les paramètres d'affichage de l'image principale à partir d'une activation par l'opérateur d'un outil de traitement d'image que comprend la batterie d'outils de traitement d'image de la fenêtre principale,
-) soit modifier les paramètres d'affichage conjointement de l'image principale et de l'image superposée à partir d'une activation par l'opérateur d'un outil de traitement d'image de l'une quelconque des batteries d'outils de traitement d'image respectivement de la fenêtre principale et de la fenêtre superposée.
-) soit remplacer l'une quelconque au moins de l'image superposée et de l'image principale.

La présente invention a aussi pour objet un système d'informations cartographiques mis en oeuvre selon un procédé tel qu'il vient d'être décrit.

Le système de la présente invention comporte un écran d'affichage d'au moins deux fenêtres, dont une fenêtre principale et une fenêtre superposée couvrant une zone de la fenêtre principale. A l'intérieur des fenêtres sont affichées des images respectivement image principale par la fenêtre principale et image superposée par la fenêtre superposée. Le système comporte des batteries d'outils de traitement des images. Chaque fenêtre comporte un réticule de désignation d'un point géographique commun. Les outils des batteries d'outils de traitement d'image sont activables par un opérateur, et génèrent le changement de l'image principale et de l'image superposée.

Selon une forme particulière de réalisation, les réticules respectifs de la fenêtre principale et de la fenêtre superposée sont confondus en un réticule commun apparaissant sur l'image superposée en étant affiché dans la fenêtre superposée.

Le système d'informations cartographiques comporte une pluralité d'outils de mise en oeuvre des différentes opérations et modes opératoires du procédé de la présente invention.

Plus particulièrement, le système comporte des outils de mise en oeuvre de l'une quelconque au moins des opérations suivantes :
-) déplacer l'image principale dans la fenêtre principale,
-) déplacer le réticule principal dans la fenêtre principale,
-) déplacer la fenêtre superposée dans la fenêtre principale,
-) déplacer l'image superposée dans la fenêtre superposée,
-) déplacer le réticule superposé dans la fenêtre superposée.

Plus particulièrement encore, le système comporte des outils de mise en oeuvre de l'un quelconque au moins des modes opératoires suivants :
-) fixer l'image principale dans la fenêtre principale,
-) rendre mobile l'image principale dans la fenêtre principale,
-) fixer le réticule principal dans la fenêtre principale et rendre le réticule principal mobile dans l'image principale,
-) rendre mobile le réticule principal dans la fenêtre principale et fixer le réticule principal dans l'image principale,
-) fixer le réticule principal dans la fenêtre principale et dans l'image principale,
-) rendre mobile le réticule principal dans la fenêtre principale et dans l'image principale,
-) fixer la fenêtre superposée dans la fenêtre principale,
-) rendre mobile la fenêtre superposée dans la fenêtre principale,
-) fixer la fenêtre superposée au réticule principal,
-) fixer et superposer le réticule superposé au réticule principal,
-) rendre mobile la fenêtre superposée par rapport au réticule principal,
-) fixer l'image superposée dans la fenêtre superposée,
-) rendre mobile l'image superposée dans la fenêtre superposée,
-) fixer le réticule superposé dans la fenêtre superposée,
-) rendre mobile le réticule superposé dans la fenêtre superposée,

Selon une forme préférée de réalisation, une première batterie d'outils de traitement d'image affectée au traitement de l'image superposée, comprend l'un au moins des outils de traitement d'image suivants :
-) un outil de déplacement en translation par glissement de la fenêtre superposée, induisant notamment des déplacements en translation précis de faible amplitude de la fenêtre superposée par rapport à la fenêtre principale. Dans le cas notamment où le réticule principal et le réticule superposé sont confondus, un tel déplacement de la fenêtre superposée provoque avantageusement une modification des paramètres d'affichage de l'image superposée et de l'image principale en correspondance avec le déplacement du réticule de la fenêtre superposée,
-) au moins un outil de déplacement de la fenêtre superposée en translation rapide de grande amplitude par rapport à la fenêtre principale, induisant une modification des paramètres d'affichage de l'image superposée en correspondance avec la zone de l'image principale couverte par l'image superposée,
-) au moins un outil de déplacement en rotation de l'image superposée, par exemple autour du réticule de la fenêtre superposée,
-) au moins un outil de variation d'échelle de l'image superposée,
-) au moins un outil d'initialisation de l'image superposée à son initialisation l'image superposée prend préférentiellement les caractéristiques courantes de l'image principale,
-) au moins un outil de saisie, de mise en mémoire et de marquage sur l'image principale d'au moins une cible géographique remarquable choisie par l'opérateur, notamment à partir de positions respectives du réticule de la fenêtre superposée par rapport à l'image principale.

Selon une forme préférée de réalisation, l'outil de déplacement en translation rapide de la fenêtre superposée comprend l'un au moins des outils de traitement d'image suivants :
-) un outil graphique faisant apparaître sur l'écran un symbole particulier sélectionnable et déplaçable par glissement par l'opérateur, et
-) une fenêtre de saisie de coordonnées géographiques, apparaissant éventuellement sur requête.

L'outil de déplacement en rotation affecté à l'image superposée comprend de préférence l'un au moins des outils de traitement d'image suivants :
-) un outil graphique usuel pour commander une rotation, et
-) un outil permettant d'orienter le nord de l'image superposée par rapport à la fenêtre superposée voire à l'écran.

L'outil de variation d'échelle de l'image superposée comprend de préférence l'un au moins des outils de traitement d'image suivants :
-) un outil de changement d'image superposée. Un tel changement d'image est réalisé à partir d'un changement de support à partir duquel est calculée l'image superposée.
-) un outil à variation progressive d'échelle de l'image superposée. Une telle variation progressive d'échelle correspond à un grossissement ou inversement à un rétrécissement progressif de l'échelle, avec effet de rapprochement ou inversement d'éloignement de l'image.

Selon une forme préférée de réalisation, une deuxième batterie affectée au traitement de l'image principale comprend l'un au moins des outils de traitement d'image suivants :
-) au moins un outil de déplacement en translation de l'image principale, induisant notamment une modification de l'image principale voire de l'image superposée,
-) au moins un outil de déplacement en rotation de l'image principale, par exemple autour du réticule de la fenêtre principale,
-) au moins un outil de variation d'échelle de l'image principale,
-) au moins un outil de blocage des paramètres d'affichage de l'image principale.

Le système d'informations cartographiques comprend une batterie annexe d'outils de traitement d'image. La batterie annexe d'outils de traitement d'image est susceptible d'être intégrée à la première batterie voire à la deuxième batterie d'outils de traitement d'image. La batterie annexe d'outils de traitement d'image comprend l'un au moins des outils de traitement d'image suivants :
-) un outil de blocage des paramètres d'affichage conjointement de l'image principale et de l'image superposée,
-) un outil d'une modification de la taille de la fenêtre superposée par rapport à la fenêtre principale,
-) un outil d'illustration de l'orientation par rapport à un référentiel d'orientation de l'une au moins de l'image principale et de l'image superposée,

Selon une forme préférée de réalisation, la fenêtre superposée est délimitée par un cadre d'affichage appelé aussi périmètre d'affichage et est bordée par au moins une partie sinon la totalité de symboles graphiques permettant d'activer les outils de traitement d'image de la batterie de la fenêtre superposée.

Le système d'informations cartographiques comprend de préférence un groupe d'outils d'appel affectés à la fenêtre superposée, comprenant :
-) un outil d'appel d'affichage de la fenêtre superposée provoquant l'affichage ou la disparition de la fenêtre superposée, et
-) un outil provoquant l'affichage d'une image superposée par sélection par l'opérateur d'un support parmi un ensemble présent dans une base de données.

L'activation des outils de traitement d'image par un opérateur est de préférence réalisée à partir d'une détection d'une pression voire d'un contact ou d'un rapprochement d'objet dans une zone où se situe un symbole graphique associé à la commande d'un outil sur l'écran, dans le cadre préféré de l'utilisation d'un écran tactile. D'autres modes d'activation par l'opérateur des outils de traitement d'image peuvent être exploités, tels qu'à partir d'une exploitation de divers outils distants informatiques, souris et/ou clavier par exemple.

Quand certains modes opératoires sont activés, par exemple celui rendant le réticule principal confondu avec le réticule superposé, plusieurs fenêtres superposées peuvent être affichées simultanément sur commande de l'opérateur. L'opérateur positionne chaque fenêtre superposée à l'endroit désiré afin d'afficher l'image superposée souhaitée, notamment déterminée par la position géographique du réticule commun sur l'image principale. Chaque fenêtre superposée comporte un réticule superposé associé qui désigne le même point géographique sur l'image superposée et sur l'image principale masquée juste en dessous. A chaque fenêtre superposée est associée une batterie d'outils permettant de modifier l'image superposée affichée dans la fenêtre superposée.

Le cadre d'affichage, le réticule et le visuel de la première batterie de chaque fenêtre superposée sont liés entre eux pour composer un ensemble. Une telle liaison procure un déplacement conjoint du périmètre d'affichage, du réticule et du visuel de la première batterie composant cet ensemble, sous l'effet d'un déplacement en translation de la fenêtre superposée par rapport à la fenêtre principale, voire plus globalement par rapport à la surface d'affichage de l'écran.

Le périmètre d'affichage de l'image superposée est visuellement délimité par un tracé de bordure. Selon un exemple préféré de réalisation, le périmètre d'affichage est conformé en rectangle. Les dimensions d'un tel rectangle sont de préférence proportionnelles aux dimensions de la surface d'affichage de l'écran. De telles proportions sont à considérer au moins à une étape initiale d'affichage de la fenêtre superposée, sans exclure une faculté de modification ultérieure de la taille de la fenêtre superposée par l'opérateur au moyen d'un outil annexe dédié à cette fonction.

Il est possible de conférer au réticule une apparence de croisillon composé de deux segments perpendiculaires se croisant en un point. Le réticule, plus précisément le point de croisement des deux segments dans le cas d'un croisillon, permet à l'opérateur de désigner avec précision par sa position sur une image de l'écran un point géographique appelé aussi cible géographique.

L'activation de l'outil d'appel d'affichage de la fenêtre superposée est susceptible d'être effectuée par contact ou pression sur un symbole graphique affiché en permanence ou non sur l'écran, ou au moyen d'un outil informatique de commande distant.

Les outils de la deuxième batterie sont susceptibles d'être commandés à partir d'un visuel regroupant l'ensemble des symboles graphiques des dits outils. Un tel visuel est par exemple affiché en bordure de la fenêtre principale et se déplace en même temps qu'elle.

Une modification de la taille de la fenêtre superposée est par exemple opérée par sélection et déplacement, grâce par exemple à la souris associée à un pointeur sur l'écran, ou grâce à un contact du doigt sur un écran tactile, d'au moins un bord de la fenêtre superposée, ou à partir d'un outil de traitement d'image modifiant la taille de la fenêtre superposée à partir de valeurs choisies et saisies par l'opérateur.

La batterie annexe comprend de préférence un outil d'illustration de l'orientation par rapport à un référentiel d'orientation de l'une au moins de l'image principale et de l'image superposée. Le référentiel d'orientation est plus particulièrement un référentiel cartographique, tel qu'une rose des vents ou analogue, voire encore est un référentiel d'orientation par rapport au nord magnétique.

Les types d'informations respectivement affichées par l'image principale et par l'image superposée relèvent par exemple d'informations géographiques, informations cartographiques notamment, de photos, d'illustrations en relief, voire toutes autres informations utiles à la navigation d'un aéronef. Un outil de traitement d'image permet par exemple de sélectionner un support et ainsi un type d'informations associé servant à afficher une image en correspondance, ledit outil étant susceptible d'être un outil du type par menu à choix sélectif ou par menu à choix déroulant.

Des exemples de réalisation de la présente invention vont être décrits en relation avec les figures de la planche annexée, dans laquelle :
- la fig.1 est un schéma illustrant des modalités d'affichage d'images par un système d'informations cartographiques selon une forme de réalisation de la présente invention.
- la fig.2 est un schéma illustrant un système d'informations cartographiques selon une autre forme de réalisation de la présente invention.
- la fig.3 est un schéma illustrant une image superposée générée à partir du système d'informations cartographiques représenté sur la fig.2.

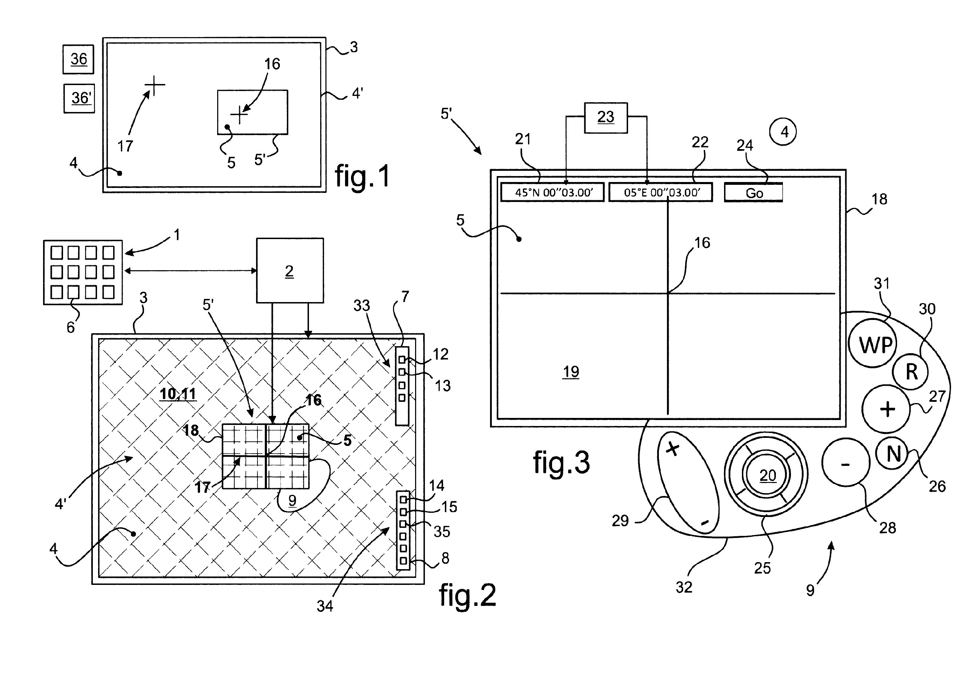

Sur la fig.1, un système d'informations cartographiques comporte un écran 3 d'affichage d'images 4,5 générées à partir de supports répertoriés dans une base de données. Une image principale 4 est affichée en fond d'écran 3 à l'intérieur d'une fenêtre principale 4'. Une image superposée 5 est affichée à l'intérieur d'une fenêtre superposée 5' couvrant une zone localisée de l'image principale 4. Chacune des images 4,5 comporte un réticule 16,17 qui lui est affecté, les réticules 16,17 définissant par leur position sur l'image qui leur est associée un point géographique commun à l'une et l'autre des images 4,5. Le dit point géographique commun peut être caractérisé au regard par d'une longitude, d'une latitude voire encore d'une altitude.

Les images 4,5 sont rendues dépendantes l'une de l'autre par le système d'informations cartographiques au moyen du point géographique commun défini par l'un et l'autre des réticules 16,17 respectivement affectés à l'image principale 4 et à l'image superposée 5.

Un opérateur dispose de divers outils 36 de mise en oeuvre d'opérations permettant par exemple de :
-) déplacer l'image principale 4 dans la fenêtre principale 4',
-) déplacer le réticule principal 17 dans la fenêtre principale 4',
-) déplacer la fenêtre superposée 5' dans la fenêtre principale 4',
-) déplacer l'image superposée 5 dans la fenêtre superposée 5',
-) déplacer le réticule superposé 16 dans la fenêtre superposée 5'.

L'opérateur dispose encore de divers outils 36' de mise en oeuvre de modes opératoires permettant par exemple de :
-) fixer l'image principale 4 dans la fenêtre principale 4',
-) rendre mobile l'image principale 4 dans la fenêtre principale 4',
-) fixer le réticule principal 17 dans la fenêtre principale 4' et rendre le réticule principal 17 mobile dans l'image principale 4,
-) rendre mobile le réticule principal 17 dans la fenêtre principale 4' et fixer le réticule principal 17 dans l'image principale 4,
-) fixer le réticule principal 17 dans la fenêtre principale 4' et dans l'image principale 4,
-) rendre mobile le réticule principal 17 dans la fenêtre principale 4' et dans l'image principale 4,
-) fixer la fenêtre superposée 5' dans la fenêtre principale 4',
-) rendre mobile la fenêtre superposée 5' dans la fenêtre principale 4',
-) fixer la fenêtre superposée 5' au réticule principal 17,
-) fixer et superposer le réticule superposé 16 au réticule principal 17,
-) rendre mobile la fenêtre superposée 5' par rapport au réticule principal 17,
-) fixer l'image superposée 5 dans la fenêtre superposée 5',
-) rendre mobile l'image superposée 5 dans la fenêtre superposée 5',
-) fixer le réticule superposé 16 dans la fenêtre superposée 5',
-) rendre mobile le réticule superposé 16 dans la fenêtre superposée 5',

Des symboles graphiques d'activation des dits outils de mise en oeuvre des opérations et modes opératoires susvisés sont affichés sur l'écran, par exemple en bordure de la fenêtre principale et/ou de la fenêtre superposée, voire en bordure de l'écran.

Sur la fig.2, un système d'informations cartographiques comporte au moins une base de données 1 ressource, un système générateur d'images 2 et un écran d'affichage 3 des images générées 4,5.

La base de données 1 répertorie des supports 6 contenant les informations utiles à l'élaboration d'images. De tels supports 6 définissent par exemple des informations relatives à des informations cartographiques, des photos ou des illustrations du relief d'une zone géographique, voire toutes autres informations susceptibles d'être utiles à la navigation d'un aéronef.

Le système générateur des images 2 est un système de traitement de données numériques issues des supports 6 répertoriés par la base de données 1. Le système générateur d'images 2 crée des images et les affiche à l'écran en utilisant des informations issues des supports 6 de la base de données 1, et des outils de traitement d'image regroupés en batteries 7,8,9 et activables par un opérateur.

L'écran 3 est de préférence un écran tactile permettant l'activation d'un outil de traitement d'image spécifique à partir d'un contact, d'une pression voire d'un glissement exercés par un opérateur sur l'écran 3 en une zone déterminée. De tels glissements et pressions sont notamment exercés par un opérateur au moyen de son doigt ou d'un instrument de pointage adapté. L'écran 3 est aussi susceptible d'être un écran dont une quelconque zone est apte à être activée de manière analogue par un opérateur au moyen d'un outil informatique distant, souris ou analogue notamment. De telles modalités d'activation d'une zone de l'écran 3 par l'opérateur sont potentiellement exploitées pour activer ledit bouton de commande associé au réticule superposé 16 commandant la mise sous dépendance des images entre elles relative au point géographique commun par le système générateur d'image 2 intégrant des moyens de traitement de données.

Le système d'informations cartographiques permet d'afficher au moins deux fenêtres 4',5' en superposition. Au moins une fenêtre principale 4' couvre une partie importante, voire la totalité de la surface d'affichage offerte par l'écran 3. Au moins une fenêtre superposée 5' couvre en partie la fenêtre principale 4' dans une zone de la fenêtre principale 4 choisie par l'opérateur. La fenêtre principale 4' affiche une image principale 4, et la fenêtre superposée 5' affiche une image superposée 5. L'image principale 4 et l'image superposée 5 sont issues de supports 6 respectifs relatifs à une zone géographique commune.

Les images 4,5 respectivement affichées par la fenêtre principale 4' et par la fenêtre superposée 5' sont individuellement modifiables par l'opérateur au moyen de batteries 7,8,9 d'outils de traitement d'image. Une première batterie 9 est affectée à une modification de l'image superposée 5. Une deuxième batterie 7 est affectée à une modification de l'image principale 4. Un visuel 33 regroupe les symboles graphiques d'outils de traitement d'image de la deuxième batterie 7. Un tel visuel 33 est par exemple disposé en bordure de la fenêtre principale 4', sinon en bordure de la surface d'affichage de l'écran 3.

Il est à considérer qu'un outil de traitement d'image comprend un symbole graphique à partir duquel l'opérateur active les moyens de calcul provoquant l'exécution de l'opération ou du mode opératoire associé à cet outil de traitement.

La deuxième batterie 7 comprend par exemple un outil de déplacement par glissement en translation 10 de l'image principale 4 et un outil de déplacement par glissement en rotation 11 de l'image principale 4. De tels glissements sont de préférence opérés tactilement par l'opérateur. La deuxième batterie 7 comprend encore par exemple un outil de variation d'échelle 12 de l'image principale 4 et un outil de blocage 13 de l'image principale 4.

Une batterie annexe 8 d'outils de traitement d'image permet de modifier ou de remplacer l'image principale 4 et/ou de l'image superposée 5. La batterie annexe 8 est susceptible d'être exploitée pour des fonctions spécifiques. Un visuel 34 regroupe les outils de traitement d'image que comprend la batterie annexe 8 et est de préférence disposé en bordure de la surface d'affichage de l'écran 3.

La batterie annexe 8 comprend par exemple des outils d'appel 14,15 d'affichage respectivement de la fenêtre principale 4' et de la fenêtre superposée 5'. La batterie annexe 8 comprend par exemple encore un outil 35 de blocage conjointement de l'image principale 4 et de l'image superposée 5.

Sur les fig.2 et fig.3, l'image principale 4 et l'image superposée 5 sont rendues dépendantes du fait d'un point géographique commun par l'intermédiaire d'un réticule 16 affiché par la fenêtre superposée 5'. Selon l'exemple de réalisation illustré, le réticule 16 affiché par l'image superposée est un réticule commun à l'image superposée 5 et à l'image principale 4. Le réticule 16 désigne par sa position un point ou une cible géographique commune aux deux images 4,5. La dépendance de l'image superposée et de l'image principale par le dit point géographique commun est générée par le système d'informations cartographiques, de préférence, tactilement ou au moyen d'un outil informatique distant.

La fenêtre superposée 5' est délimitée par un cadre encore appelé périmètre d'affichage 18 de l'image superposée 5, et est bordée par un visuel 32 regroupant les symboles graphiques affectés aux outils de traitement d'image que comprend la première batterie 9. Le réticule 16 est placé à l'intérieur du périmètre d'affichage 18.

La première batterie 9 comprend un outil 19 de déplacement en translation précis de faible amplitude de la fenêtre superposée 5 par rapport à l'image principale 4. Cet outil 19 correspond à une quelconque zone de la fenêtre superposée 5 apte à être activée par l'opérateur, et de préférence à partir d'une zone située à l'intérieur du périmètre d'affichage 18. Cet outil 19 est manipulable par l'opérateur par glissement translatif, suivant une course lente et précise, pour modifier en correspondance l'image superposée 5.

La première batterie 9 comprend au moins un outil de déplacement rapide de grande amplitude de la fenêtre superposée 5' par rapport à l'image principale 4.

Plus particulièrement, un outil 20 de prise et d'entraînement de la fenêtre superposée 5' en translation est manipulable par l'opérateur par glissement translatif pour déplacer la fenêtre superposée 5' en translation suivant une course rapide de grande amplitude. Un symbole graphique de cet outil 20 est intégré au visuel 32 de la première batterie 9.

Plus particulièrement encore, des fenêtres de saisie 21,22 sont affectées à la saisie par l'opérateur de coordonnées géographiques au moyen d'un outil de saisie distant 23, tel qu'un clavier informatique par exemple. Un outil de validation 24 permet à l'opérateur de provoquer le déplacement rapide de la fenêtre superposée 5' par rapport à l'image principale 4 en correspondance avec les coordonnées géographiques préalablement saisies. Des visuels respectivement de chacune des fenêtres de saisie 21,22 et de l'outil de validation 24 sont de préférence inscrits sur la fenêtre superposée, de préférence à l'intérieur du périmètre d'affichage.

La première batterie 9 comprend au moins un outil de déplacement en rotation autour du réticule 16 de l'image superposée 5. Plus particulièrement, un outil rotatif 25 est illustré par un symbole graphique agencé en disque inscrit dans le visuel 32 de la première batterie 9. A partir d'une manipulation de l'outil rotatif 25, l'opérateur commande par glissement tournant une mise en rotation de l'image superposée 5.

Plus particulièrement encore, un outil 26 de mise en orientation de l'image superposée 5 permet à l'opérateur de commander un pivotement de cette image 5 induisant sa mise en orientation par rapport au nord, nord cartographique notamment. Un symbole graphique de cet outil est inscrit dans le visuel 32 de la première batterie 9.

La première batterie 9 comprend au moins un outil de variation d'échelle de l'image superposée 5, soit par changement d'image superposée 5 et plus spécifiquement par changement de support, soit par variation progressive de taille de l'image superposée 5.

Plus particulièrement, un outil de changement d'image comprend deux outils de traitement d'image 27,28 permettant à l'opérateur de remplacer l'image superposée 5 par une autre image superposée 5 en fonction d'une variation d'échelle souhaitée, respectivement supérieure ou inférieure. Des symboles graphiques respectifs des deux dits outils de traitement d'image sont inscrits dans le visuel 32 de la première batterie 9.

Plus particulièrement encore, un outil 29 à variation progressive de taille de l'image superposée 5 permet à l'opérateur d'effectuer une modification continue de l'échelle de l'image superposée 5. Une telle variation progressive de taille d'image correspond à un effet visuel d'éloignement ou de rapprochement progressifs de l'image. La modification continue de l'échelle de l'image superposée 5 correspond à un agrandissement ou inversement à une réduction de l'image superposée 5. Un symbole graphique regroupant les deux outils de traitement d'image 27,28 respectivement affectés à l'agrandissement et à la réduction de l'image superposée 5, est inscrit dans le visuel 32 de la première batterie 9.

La première batterie 9 comprend un outil 30 d'initialisation de l'image superposée 5 sur le fondement de l'image principale 4. A partir de cet outil 30, l'opérateur peut mettre en correspondance l'orientation et l'échelle de l'image superposée 5, avec celles de l'image principale 4. Un symbole graphique de cet outil 30 est inscrit dans le visuel 32 de la première batterie 9.

La première batterie 9 comprend un outil 31 de saisie, de mise en mémoire et de marquage sur l'image principale 4 d'une pluralité de cibles géographiques. Ces cibles marquées sont susceptibles d'être exploitées individuellement par l'opérateur, pour amener et placer successivement la fenêtre superposée 5' en regard sur les cibles marquées. Une pluralité de fenêtres superposées 5' respectivement affectées aux cibles géographiques préalablement saisies et mémorisées par l'opérateur sont susceptibles d'être affichées simultanément. Un symbole graphique de cet outil 31 est inscrit dans le visuel 32 de la première batterie 9.

## Revendications

1. Procédé de mise en oeuvre d'un système d'informations cartographiques générateur d'images (4,5) comportant au moins une base de données (1), un système générateur d'images (2) et un écran d'affichage (3) des images (4,5) générées, les images (4,5) étant issues de supports (6) respectifs répertoriés dans ladite au moins une base de données (1) en étant formés de fichiers numériques contenant les informations nécessaires à l'affichage des images (4,5), le système générateur des images (2) étant un système de traitement de données issues des supports (6) et créant des images (4,5) aptes à être affichées en superposition sur un écran (3), dont une image principale (4) et au moins une image superposée (5) sur l'image principale (4), le système d'informations cartographiques permettant d'afficher au moins deux fenêtres (4',5') en superposition dont une fenêtre principale (4') couvrant au moins en partie la surface d'affichage de l'écran (3) en affichant l'image principale (4) et dont une fenêtre superposée (5') couvrant en partie la fenêtre principale (4') dans une zone de la fenêtre principale (4') choisie par un opérateur et affichant l'image superposée (5), des outils de traitement d'image (36,36') étant regroupés en batteries (7,8,9) et étant activables par l'opérateur pour modifier les images (4,5),
**caractérisé en ce que** l'image principale (4) et l'image superposée (5) sont issues de supports (6) respectifs relatifs à une zone géographique commune, la fenêtre principale (4') et la fenêtre superposée (5') comportant chacune un réticule (16,17), respectivement réticule principal (17) pour la fenêtre principale (4') et réticule superposé (16) pour la fenêtre superposée (5'), les réticules (16,17) désignant un point géographique commun par lequel les images (4,5) sont rendues dépendantes l'une de l'autre, la dépendance de l'image superposée et de l'image principale par le dit point géographique commun étant générée par le système d'informations cartographiques par l'intermédiaire du réticule (16) affiché par la fenêtre superposée (5').

2. Procédé selon la revendication 1,
**caractérisé en ce qu'**à partir des outils de traitement d'image (36,36'), l'opérateur effectue l'une au moins des opérations suivantes :
-) déplacer l'image principale (4) dans la fenêtre principale (4'),
-) déplacer le réticule principal (17) dans la fenêtre principale (4'),
-) déplacer la fenêtre superposée (5') dans la fenêtre principale (4'),
-) déplacer l'image superposée (5) dans la fenêtre superposée (5'),
-) déplacer le réticule superposé (16) dans la fenêtre superposée (5').

3. Procédé selon la revendication 2,
**caractérisé en ce que** le procédé comprend l'un au moins des modes opératoires suivants :
-) fixer l'image principale (4) dans la fenêtre principale (4'),
-) rendre mobile l'image principale (4) dans la fenêtre principale (4'),
-) fixer le réticule principal (17) dans la fenêtre principale (4') et rendre le réticule principal (17) mobile dans l'image principale (4),
-) rendre mobile le réticule principal (17) dans la fenêtre principale (4') et fixer le réticule principal (17) dans l'image principale (4),
-) fixer le réticule principal (17) dans la fenêtre principale (4') et dans l'image principale (4),
-) rendre mobile le réticule principal (17) dans la fenêtre principale (4') et dans l'image principale (4),
-) fixer la fenêtre superposée (5') dans la fenêtre principale (4'),
-) rendre mobile la fenêtre superposée (5') dans la fenêtre principale (4'),
-) fixer la fenêtre superposée (5') au réticule principal (17),
-) fixer et superposer le réticule superposé (16) au réticule principal (17),
-) rendre mobile la fenêtre superposée (5') par rapport au réticule principal (17),
-) fixer l'image superposée (5) dans la fenêtre superposée (5'),
-) rendre mobile l'image superposée (5) dans la fenêtre superposée (5'),
-) fixer le réticule superposé (16) dans la fenêtre superposée (5'),
-) rendre mobile le réticule superposé (16) dans la fenêtre superposée (5'),

4. Procédé selon l'une quelconque des revendications 1 à 3,
**caractérisé en ce que** les réticules (16,17) de chacune des fenêtres (4',5') sont confondus en un réticule commun (16) affiché sur l'image superposée à l'intérieur de la fenêtre superposée (5).

5. Procédé selon l'une quelconque des revendications 1 à 4,
**caractérisé en ce qu'il** comprend l'une quelconque au moins des opérations suivantes de traitement de l'image superposée (5) et de l'image principale (4) par l'opérateur au moyen d'outils de traitement d'image respectifs :
-) remplacer par une nouvelle image l'une quelconque de l'image principale (4) et de l'image superposée (5), l'autre image étant inchangée,
-) modifier l'échelle de l'une quelconque de l'image principale (4) et de l'image superposée (5), l'autre image étant inchangée,
-) modifier l'échelle de l'une quelconque de l'image principale et de l'image superposée, l'échelle de l'autre image étant changée en correspondance,
-) faire pivoter l'une quelconque de l'image principale (4) et de l'image superposée (5), l'autre image étant inchangée,
-) faire pivoter l'une quelconque de l'image principale (4) et de l'image superposée (5), l'autre image pivotant en correspondance,
-) déplacer en translation par glissement l'une quelconque de l'image principale (4) et de l'image superposée (5), l'autre image étant déplacée en translation en correspondance,
-) orienter au nord l'une quelconque de l'image principale (4) et de l'image superposée (5), l'autre image étant inchangée,
-) positionner le réticule principal (4) sur l'image principale (4') et le réticule superposé (5) sur l'image superposée (5') en un point géographique par saisie des coordonnées géographiques du dit point géographique.

6. Procédé selon l'une quelconque des revendications 1 à 5, **caractérisé en ce qu'il** comprend les opérations suivantes :
- générer l'affichage de l'image principale (4) à partir de l'activation par l'opérateur d'au moins un outil d'appel d'affichage (15) affecté à l'image principale (4),
- générer l'affichage de l'image superposée (5), à partir de l'activation par l'opérateur d'un outil d'appel (14) d'affichage affecté à l'image superposée (5),
- positionner l'un quelconque des réticules (16,17) sur une cible géographique correspondant à zone géographique à observer, le dit positionnement provoquant un déplacement de l'une au moins des images (4,5),
puis, à partir de l'activation sélective d'outils de traitement d'image (7,9) par l'opérateur, provoquer un traitement de l'image principale (4) et de l'image superposée (5) selon les modalités alternatives suivantes :
-) soit maintenir en l'état l'image principale (4), et modifier l'image superposée (5) à partir d'une activation par l'opérateur d'un outil de traitement d'image que comprend une batterie (9) d'outils de traitement d'image affectée à la fenêtre superposée (5'),
-) soit maintenir en l'état l'image superposée (5), et modifier l'image principale (4) à partir d'une activation par l'opérateur d'un outil de traitement d'image que comprend une batterie (7) d'outils de traitement d'image affectée à la fenêtre principale (4'),
-) soit modifier conjointement l'image principale (4) et l'image superposée (5) à partir d'une activation par l'opérateur d'un outil de traitement d'image de l'une quelconque de batteries (7,9) d'outils de traitement d'image respectivement affectées à la fenêtre principale (4') et à la fenêtre superposée (5')
-) soit remplacer l'une quelconque au moins de l'image superposée (5) et de l'image principale (4).

7. Système d'informations cartographiques mis en oeuvre selon un procédé conforme à l'une quelconque des revendications 1 à 6,
**caractérisé en ce que** le système comporte au moins une base de données (1), un système générateur d'images (2) et un écran d'affichage (3) des images (4,5) générées, les images (4,5) étant issues de supports (6) respectifs répertoriés dans ladite au moins une base de données (1) en étant formés de fichiers numériques contenant les informations nécessaires à l'affichage des images (4,5), le système générateur des images (2) étant un système de traitement de données issues des supports (6) et créant des images (4,5) aptes à être affichées en superposition sur ledit écran d'affichage (3) dans au moins deux fenêtres (4',5'), dont une fenêtre principale (4) et une fenêtre superposée (5') couvrant une zone de la fenêtre principale (4'), à l'intérieur desquelles fenêtres (4',5') sont affichées des images (4,5) respectivement image principale (4) par la fenêtre principale (4') et image superposée (5) par la fenêtre superposée (5'), le système comportant des batteries (7,9) d'outils de traitement des images (4,5), les fenêtres (4',5') comportant chacune un réticule (16,17) désignant un point géographique commun, l'image superposée (5) et l'image principale (4) étant rendues dépendantes du point géographique commun par le système cartographique par l'intermédiaire du réticule (16) affiché par la fenêtre superposée (5').

8. Système d'informations cartographiques selon la revendication 7,
**caractérisé en ce que** les réticules (16,17) respectifs de la fenêtre principale (4') et de la fenêtre superposée (5') sont confondus en un réticule commun (16) affiché sur l'image superposée dans la fenêtre superposée (5').

9. Système d'informations cartographiques selon l'une quelconque des revendications 7 et 8,
**caractérisé en ce que** le système comporte des outils (36) de mise en oeuvre de l'une quelconque au moins des opérations suivantes :
-) déplacer l'image principale (4) dans la fenêtre principale (4'),
-) déplacer le réticule principal (17) dans la fenêtre principale (4'),
-) déplacer la fenêtre superposée (5') dans la fenêtre principale (4'),
-) déplacer l'image superposée (5) dans la fenêtre superposée (5'),
-) déplacer le réticule superposé (16) dans la fenêtre superposée (5').

10. Système d'informations cartographiques selon l'une quelconque des revendications 7 à 9,
**caractérisé en ce que** le système comporte des outils (36') de mise en oeuvre de l'un quelconque au moins des modes opératoires suivants :
-) fixer l'image principale (4) dans la fenêtre principale (4'),
-) rendre mobile l'image principale (4) dans la fenêtre principale (4'),
-) fixer le réticule principal (17) dans la fenêtre principale (4') et rendre le réticule principal (17) mobile dans l'image principale (4),
-) rendre mobile le réticule principal (17) dans la fenêtre principale (4') et fixer le réticule principal (17) dans l'image principale (4),
-) fixer le réticule principal (17) dans la fenêtre principale (4') et dans l'image principale (4),
-) rendre mobile le réticule principal (17) dans la fenêtre principale (4') et dans l'image principale (4),
-) fixer la fenêtre superposée (5') dans la fenêtre principale (4'),
-) rendre mobile la fenêtre superposée (5') dans la fenêtre principale (4'),
-) fixer la fenêtre superposée (5') au réticule principal (17),
-) fixer et superposer le réticule superposé (16) au réticule principal (17),
-) rendre mobile la fenêtre superposée (5') par rapport au réticule principal (17),
-) fixer l'image superposée (5) dans la fenêtre superposée (5'),
-) rendre mobile l'image superposée (5) dans la fenêtre superposée (5'),
-) fixer le réticule superposé (16) dans la fenêtre superposée (5'),
-) rendre mobile le réticule superposé (16) dans la fenêtre superposée (5'),

11. Système d'informations cartographiques selon les revendications 9 et 10,
**caractérisé en ce qu'**une première batterie (9) d'outils de traitement d'image de la fenêtre superposée (5') affectée au traitement de l'image superposée (5) comprend l'un au moins des outils de traitement d'image suivants :
-) un outil de déplacement en translation par glissement (20) de la fenêtre superposée (5'), induisant des déplacements en translation précis de faible amplitude de la fenêtre superposée (5') par rapport à la fenêtre principale,
- au moins un outil de déplacement de la fenêtre superposée (5') en translation rapide (21,22,23) de grande amplitude par rapport à la fenêtre principale (4'), induisant une modification de l'image superposée (5) en correspondance avec la zone de l'image principale (4) couverte par l'image superposée (5),
-) au moins un outil (25, 30) de déplacement en rotation de l'image superposée (5),
-) au moins un outil (27, 28, 29) de variation d'échelle de l'image superposée (5),
-) au moins un outil d'initialisation (30) de l'image superposée (5),
-) au moins un outil (31) de saisie, de mise en mémoire et de marquage sur l'image principale (4) d'au moins une cible géographique.

12. Système d'informations cartographiques selon l'une quelconque des revendications 7 à 11,
**caractérisé en ce qu'**une deuxième batterie (7) de la fenêtre principale (4') affectée au traitement de l'image principale (4) comprend l'un au moins des outils de traitement d'image suivants :
-) au moins un outil (10) de déplacement par glissement en translation de l'image principale (4),
-) au moins un outil (11) de déplacement en rotation de l'image principale (4),
-) au moins un outil de variation d'échelle de l'image principale (4),
-) au moins un outil (13) de blocage de l'image principale (4).

13. Système d'informations cartographiques selon l'une quelconque des revendications 7 à 12,
**caractérisé en ce que** le système d'informations cartographiques comprend une batterie annexe (8) d'outils de traitement d'image comprenant l'un au moins des outils de traitement d'image suivants :
-) un outil de blocage (35) conjointement de l'image principale (5) et de l'image superposée (4),
-) un outil d'une modification de la taille.de la fenêtre superposée (5') par rapport à la fenêtre principale (4'),
-) un outil d'illustration de l'orientation par rapport à un référentiel d'orientation de l'une au moins de l'image principale (4) et de l'image superposée (5),

14. Système d'informations cartographiques selon l'une quelconque des revendications 7 à 13,
**caractérisé en ce que** la fenêtre superposée (5) est délimitée par un périmètre d'affichage (18) et est bordée par au moins une partie sinon la totalité de symboles graphiques permettant d'activer des outils de traitement d'image de la batterie (9) de fenêtre superposée (5').

15. Système d'informations cartographiques selon l'une quelconque des revendications 7 à 14,
**caractérisé en ce que** le système d'informations cartographiques comprend un groupe d'outils d'appel affectés à la fenêtre superposée (5'), comprenant :
-) un outil d'appel d'affichage (14) de la fenêtre superposée provoquant l'affichage ou la disparition de la fenêtre superposée, et
-) un outil d'appel de l'image superposée (5) provoquant l'affichage d'une image superposée (5) par sélection par l'opérateur d'un support (6) parmi un ensemble présent dans une base de données (1).
